# FASCICULE DE BREVET EUROPEEN

(11) **EP 4 342 665 B1**
(45) Date de publication et mention de la délivrance du brevet: **17.09.2025**
(21) Numéro de dépôt: 24157376.5
(22) Date de dépôt: 11.07.2022
(51) Int. Cl.: B30B 9/22, C12G 1/00

(54) **PRESSOIR NOTAMMENT POUR UNE APPLICATION DANS LE DOMAINE VITICOLE**
PRESSE, INSBESONDERE FÜR EINE ANWENDUNG IM WEINBAU
PRESS, IN PARTICULAR FOR USE IN THE VINEYARD FIELD

(30) Priorité: 12.07.2021 FR 2107554
(43) Date de publication de la demande: 27.03.2024
(62) Demande divisionnaire de: 22184012.7
(73) Titulaire: Bucher Vaslin, 49290 Chalonnes sur Loire (FR)
(72) Inventeur: NOILET, Pascal, 49290 CHALONNES-SUR-LOIRE (FR); ESPIAU, Pascal, 49290 CHALONNES-SUR-LOIRE (FR)
(74) Mandataire: Ipsilon

(56) Documents cités:
- EP-A1- 0 341 098
- WO-A2-2005/005133
- DE-A1- 102019 133 329
- DE-A1- 3 543 135
- FR-A1- 2 657 541
- FR-A1- 3 004 382

## Description

La présente invention concerne un pressoir notamment pour une application dans le domaine viticole.

Elle concerne en particulier un pressoir de préférence pneumatique, pour séparer les parties solide et liquide, encore appelée jus, d'une matière telle que de la vendange, ledit pressoir comprenant une cuve présentant un axe longitudinal, un châssis support sur lequel la cuve est disposée sensiblement à l'horizontale et est montée à rotation autour de son axe longitudinal et des moyens de drainage des jus contenus dans la cuve, ladite cuve présentant un corps tubulaire fermé à chacune de ses extrémités opposées par un flasque, l'un des flasques de la cuve étant équipé d'un orifice axial de remplissage pour le remplissage de la cuve en matière à presser, ladite cuve étant équipée en outre d'au moins un orifice de pressurisation, ladite cuve comprenant au moins une membrane, ladite membrane séparant de manière étanche le volume intérieur de la cuve en une chambre dite de traitement, dans laquelle débouche ledit orifice axial de remplissage, et au moins une chambre dite de commande, dans laquelle débouche le ou l'un des orifices de pressurisation, ladite chambre de traitement étant munie des moyens de drainage disposés au moins dans une zone du corps tubulaire de la cuve.

Un pressoir du type précité est connu comme l'illustrent par exemple les documents CN20874506 ou CN209466706 ou EP0341098. Classiquement dans un tel pressoir, la membrane est configurée de manière à pouvoir, à l'état pressurisé de la chambre de commande, venir se plaquer contre les parois de la cuve délimitant la chambre de traitement, et, à l'état dépressurisé de la chambre de commande, venir se plaquer contre les parois de la cuve délimitant ladite chambre de commande. De tels pressoirs ont pour avantage, du fait de la présence d'un orifice axial de remplissage, de pouvoir permettre un remplissage de la cuve quelle que soit la position angulaire de la cuve et en particulier, y compris pendant une rotation de la cuve. Il en résulte des cycles de fonctionnement plus courts du pressoir. L'inconvénient de cette conception résulte dans l'évacuation des jus libres. L'amenée de la vendange dans la cuve s'opère au cœur de la vendange par un orifice situé au plus près de l'axe longitudinal de rotation de la cuve. Les fabricants de tels pressoirs demeurent donc à la recherche de solutions permettant d'accroitre encore les performances de tels pressoirs. Document DE 10 2019 133329 A1 décrit un pressoir selon le préambule de la revendication 1.

Un but de l'invention est de proposer un pressoir du type précité dont la conception permet d'optimiser le fonctionnement du pressoir sans nuire à sa possibilité de remplissage pendant une rotation de la cuve.

Un autre but de l'invention est de proposer un pressoir du type précité dont la conception permet d'optimiser en parallèle le remplissage et le drainage de la cuve.

A cet effet, l'invention a pour objet un pressoir, de préférence pneumatique, pour séparer les parties solide et liquide, encore appelée jus, d'une matière telle que de la vendange, selon la revendication 1. Par l'expression "un châssis support sur lequel la cuve est disposée sensiblement à l'horizontale", on entend un châssis support sur lequel la cuve est disposée à l'horizontale à ± 20° près à l'état positionné du pressoir sur une surface plane horizontale. La présence d'un ou plusieurs conduits internes de dérivation de la matière à presser depuis l'orifice axial de remplissage de la cuve vers les moyens de drainage permet de diriger la matière à presser et de la rapprocher d'au moins une partie des moyens de drainage pour faciliter l'évacuation des jus libres lors du remplissage de la cuve. Cette conception du ou des conduits internes qui débouchent en sortie à l'intérieur de la chambre de traitement en un ou plusieurs emplacements de sortie écartés de l'axe longitudinal de rotation de la cuve suivant une direction radiale ou transversale audit axe pour rapprocher la sortie du conduit interne d'au moins une partie des moyens de drainage permet d'optimiser la distance à parcourir par les jus pour sortir de la cuve. Ainsi, la vendange contenant des jus libres peut se positionner lors de son arrivée dans la cuve sous au moins une partie de la vendange égouttée au plus près des moyens de drainage à l'inverse de l'état de la technique où la vendange contenant des jus libres se positionne lors de son arrivée dans la cuve sur la vendange égouttée. Il résulte de cette disposition une accélération de l'évacuation des jus libres hors de la cuve et la possibilité de limiter la mise en rotation de la cuve, cette mise en rotation servant à éviter un colmatage des moyens de drainage pendant la phase de remplissage.

Selon un mode de réalisation de l'invention, pour le ou au moins l'un des conduits internes de la chambre de traitement, la distance entre le ou au moins l'un des emplacements de sortie du conduit interne de la chambre de traitement et le corps cylindrique de la cuve est inférieure à la distance entre ledit emplacement de sortie du conduit interne de la chambre de traitement et l'axe longitudinal de rotation de la cuve. Cette disposition permet à chaque emplacement de sortie du ou des conduits internes d'être plus proche d'au moins une partie des moyens de drainage que de l'orifice axial de remplissage.

Selon un mode de réalisation de l'invention, le ou au moins l'un des conduits internes se développe le long du flasque muni de l'orifice axial de remplissage au moins partiellement suivant une direction radiale. Ce développement du ou des conduits internes suivant une direction radiale permet d'optimiser la longueur du ou des conduits internes et de faciliter un écoulement gravitaire de la matière à l'intérieur du ou des conduits internes.

Selon un mode de réalisation de l'invention, le ou au moins l'un des emplacements de sortie du ou au d'au moins l'un des conduits internes est disposé à l'intérieur de la chambre de traitement au niveau d'au moins une partie des moyens de drainage de la cuve. Cette disposition permet de réduire la longueur du circuit à effectuer pour les jus libres.

Selon un mode de réalisation de l'invention, le ou au moins l'un des emplacements de sortie du ou au d'au moins l'un des conduits internes est disposé dans la ou l'une des zones du corps tubulaire de la cuve équipée de moyens de drainage. Cette disposition permet aux jus libres d'être pris en charge par les moyens de drainage pratiquement dès leur sortie du conduit interne. Il en résulte une rapidité de l'évacuation des jus libres hors de la cuve.

Selon l'invention, les moyens de drainage comprennent un ou plusieurs drains, où, de préférence chaque drain se présente sous forme d'une goulotte ou portion de conduit analogue, allongée, ajourée, et le ou chaque drain est monté dans la cuve.

Selon un mode de réalisation de l'invention, les moyens de drainage comprenant plusieurs drains, le ou au moins l'un des emplacements de sortie du ou au d'au moins l'un des conduits interne est disposé entre les ou deux des drains des moyens de drainage.

Selon un mode de réalisation de l'invention, le ou au moins l'un des conduits internes est un conduit à paroi pleine entre son entrée et le ou chacun de ses emplacements de sortie. Cette conception du ou des conduits internes généralement en tôle permet de limiter une perturbation de la circulation de la matière à l'intérieur du ou des conduits internes.

Selon un mode de réalisation de l'invention, le pressoir qui comprend, pour le montage à rotation de la cuve autour de son axe longitudinal, un dispositif d'entraînement en rotation de la cuve et une unité de commande du dispositif d'entraînement en rotation, comprend en outre un dispositif de détermination d'un paramètre représentatif du niveau de remplissage de la cuve et l'unité de commande du dispositif d'entraînement en rotation de la cuve est configurée pour acquérir des données du dispositif de détermination d'un paramètre représentatif du niveau de remplissage de la cuve et pour commander le dispositif d'entraînement en rotation de la cuve en fonction desdites données.

Selon un mode de réalisation de l'invention, le ou au moins l'un des orifices de pressurisation est un orifice axial, la ou au moins l'une des membranes présente une zone de raccordement à la cuve qui s'étend au moins partiellement , au niveau d'un flasque d'un côté d'un plan médian de la cuve passant par les orifices axiaux de remplissage et de pressurisation, le pressoir comprend au moins une porte d'accès à la cuve et un dispositif de mise à l'échappement de la cuve, ce dispositif de mise à l'échappement étant disposé à l'intérieur d'un secteur angulaire délimité par un premier plan passant par la zone de raccordement de la membrane au corps cylindrique de la cuve et par un second plan radial audit corps cylindrique de la cuve et passant par la porte. Ce dispositif de mise à l'échappement permet d'éviter une surpression ou une dépression à l'intérieur de la cuve pendant la phase de remplissage de la cuve par l'orifice axial. De préférence, ce dispositif de mise à l'échappement est un séparateur liquide/solide. Dans ce cas, un tel dispositif de mise à l'échappement est un dispositif polyvalent qui permet en sus de la mise à l'air de la cuve d'augmenter la surface de drainage de la cuve. En variante, ce dispositif de mise à l'échappement peut être formé d'au moins une vanne.

Selon un mode de réalisation de l'invention, le dispositif de détermination d'un paramètre représentatif du niveau de remplissage de la cuve est un capteur de présence de liquide disposé dans la chambre de traitement. Cette disposition permet de disposer dans la chambre de traitement d'un capteur positionné au niveau d'un point haut de la chambre de traitement lorsque les moyens de drainage sont disposés dans la partie inférieure de la chambre de traitement.

Selon un mode de réalisation de l'invention, la cuve comprenant une seule membrane, ladite membrane est fixée de manière étanche d'une part, au corps cylindrique de la cuve suivant deux bords longitudinaux opposés, d'autre part, aux flasques suivant deux bords transversaux respectifs et les bords transversaux de raccordement de la membrane aux flasques s'étendent, au niveau de l'un des flasques, d'un côté d'un plan longitudinal médian ou diamétral de la cuve passant par l'orifice axial de remplissage de la cuve et l'orifice axial de pressurisation, et au niveau du flasque opposé, de l'autre côté dudit plan longitudinal médian.

### Brève description des dessins

L'invention sera bien comprise à la lecture de la description suivante d'exemples de réalisation, en référence aux dessins annexés dans lesquels :
[Fig. 1] représente une vue schématique en transparence d'un pressoir conforme à l'invention ;
[Fig. 2] représente une vue en perspective de l'extrémité de la cuve munie d'un conduit interne ;
[Fig. 3] représente une vue schématique en coupe transversale de la cuve prise côté extrémité de la cuve munie du conduit interne ;
[Fig. 4] représente une vue schématique en coupe transversale de la cuve prise côté extrémité de la cuve munie du conduit interne ;

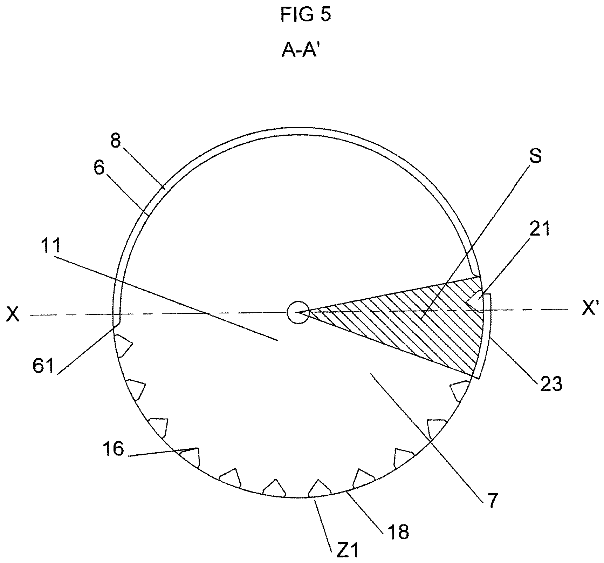

[Fig. 5] représente une vue schématique en coupe suivant AA' de la figure 1 prise du côté de la cuve munie du conduit interne ;
[Fig. 6] représente une vue schématique en coupe transversale de la cuve.

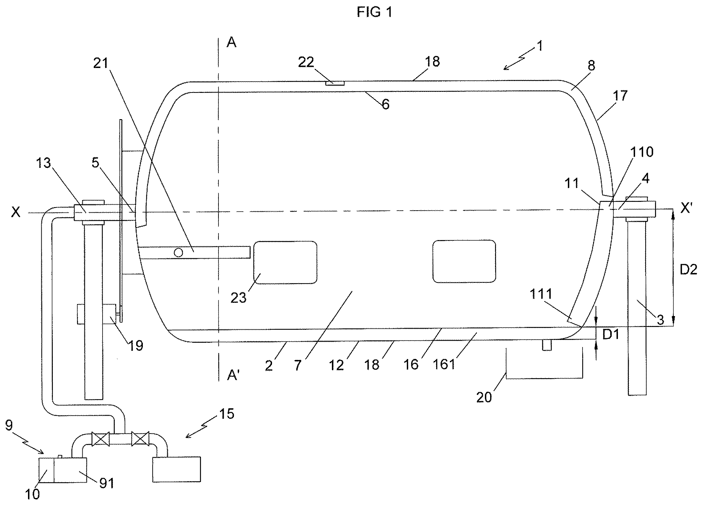

Le pressoir 1, tel qu'illustré à la figure 1, est un pressoir pneumatique destiné à séparer les parties solides des liquides encore appelés jus d'une matière, telle que de la vendange. Ce pressoir 1 comprend une cuve 2. Cette cuve 2 délimite une enceinte. Cette cuve 2 présente, pour la délimitation de l'enceinte, des parois. Cette cuve 2 est ici une cuve cylindrique à axe sensiblement horizontal avec une paroi latérale périphérique formant le corps 18 cylindrique de la cuve et deux parois d'extrémité ou flasques 17 fermant la cuve 2 respectivement à une extrémité et à l'autre extrémité du corps 18 cylindrique. L'axe dit sensiblement horizontal de la cuve 2 est un axe horizontal à ± 20° près à l'état positionné du pressoir sur une surface plane horizontale.

Cette cuve 2 est une cuve rotative montée à rotation autour d'un axe dit longitudinal de la cuve 2 représenté en XX' aux figures. Cet axe longitudinal XX' correspond à l'axe longitudinal sensiblement horizontal du cylindre formé par la cuve 2. Le pressoir 1 comprend un châssis 3 support sur lequel la cuve 2 repose. Ce châssis 3 support comprend des potelets reposant au sol et sur lesquels la cuve 2 est montée à rotation. Les potelets du châssis 3 supportent ainsi par exemple chacun un palier coopérant avec un tourillon de la cuve disposé au centre de chaque flasque 17 de la cuve 2. Le pressoir 1 comprend encore un dispositif 19 d'entraînement en rotation de la cuve 2 autour de l'axe XX' longitudinal de la cuve 2 et une unité 10 de commande du dispositif 19 d'entraînement en rotation de la cuve 2. Ce dispositif 19 d'entraînement en rotation de la cuve 2 peut comprendre un moteur électrique porté par l'un des potelets. L'arbre rotatif moteur de ce moteur électrique porte un pignon qui s'engrène de manière directe ou indirecte avec une denture de la cuve 2.

Pour permettre le remplissage de la cuve 2 en matière à presser, l'un des flasques 17 de la cuve 2 est équipé d'un orifice axial de remplissage 4. Cet orifice axial de remplissage 4 est coaxial à l'axe XX' longitudinal de la cuve. Cet orifice axial de remplissage 4 est raccordé à un circuit de pompage extérieur à la cuve et dont il forme une extrémité. La cuve comporte par ailleurs, pour son remplissage, une ou plusieurs portes 23 d'accès à la cuve disposées sur le corps 18 cylindrique de la cuve. Dans l'exemple, deux portes 23 d'accès sont représentées. Ces portes 23 d'accès permettent une alimentation du pressoir 1 à pression atmosphérique. Ces portes 23 d'accès font également office d'orifice de vidange de la cuve. L'orifice axial 4 de remplissage peut permettre quant à lui une alimentation sous pression de la cuve 2 en matière à presser.

Le flasque 17 opposé à celui équipé de l'orifice 4 de remplissage axial est, quant à lui, dans l'exemple représenté, équipé d'un orifice de pressurisation 5. Cet orifice de pressurisation 5 est un orifice axial de pressurisation ici commun avec un orifice de dépressurisation de la cuve 2. Cet orifice axial de pressurisation 5 fait donc également office d'orifice de dépressurisation de la cuve 2. A l'intérieur de la cuve 2 est disposée au moins une membrane 6 souple déformable. Dans l'exemple représenté à la figure 1, une seule membrane 6 est prévue. La membrane 6 est fixée de manière étanche d'une part, au corps cylindrique 18 de la cuve 2 suivant deux bords longitudinaux opposés, d'autre part, aux flasques 17 suivant deux bords transversaux respectifs. La zone de raccordement de la membrane 6 à la cuve 2 est représentée en 61 aux figures. Les bords transversaux de raccordement de la membrane 6 aux flasques s'étendent, au niveau de l'un des flasques 17, d'un côté d'un plan longitudinal médian ou diamétral de la cuve 2 passant par l'orifice axial de remplissage 4 de la cuve 2 et l'orifice axial de pressurisation 5, et au niveau du flasque 17 opposé, de l'autre côté dudit plan longitudinal médian. La membrane 6 sépare ainsi de manière étanche le volume intérieur de la cuve 2 en deux chambres, à savoir, l'une, dite chambre 7 de traitement dans laquelle débouchent l'orifice axial de remplissage 4 de la cuve 2 et la ou les portes 23 d'accès et l'autre, dite chambre 8 de commande, dans laquelle débouche l'orifice axial de pressurisation 5 faisant également office d'orifice de dépressurisation. Bien évidemment, l'orifice de pressurisation et l'orifice de dépressurisation auraient pu être réalisés de manière distincte. En variante, la cuve 2 aurait pu être séparée au moyen de plusieurs membranes en une chambre de traitement et plusieurs chambres de commande équipées chacune d'un orifice de pressurisation.

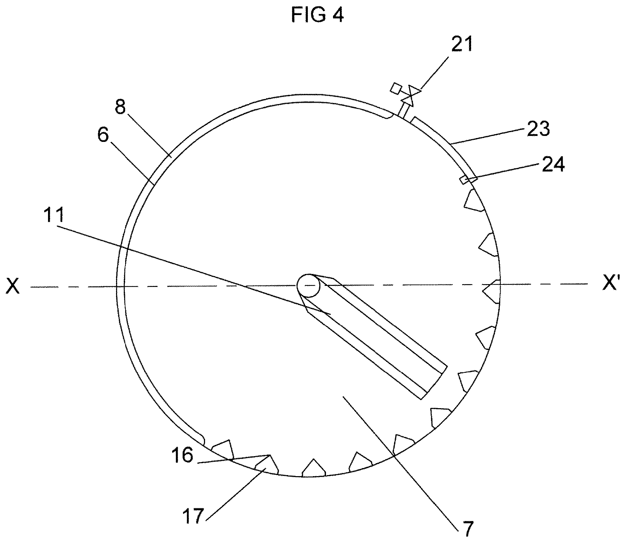

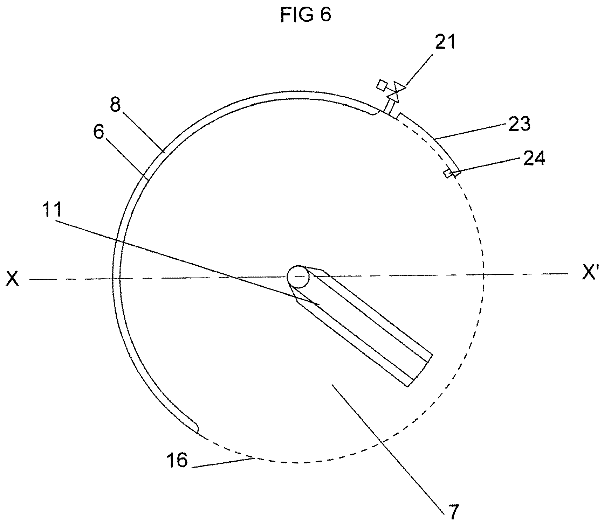

La chambre 7 de traitement comprend des moyens 16 de drainage configurés pour permettre une communication entre l'intérieur et l'extérieur de la cuve 2 et en particulier le drainage des jus contenus dans la cuve 2. Ces moyens 16 de drainage comprennent un ou plusieurs drains 161. Chaque drain peut se présenter sous forme d'orifice de drainage, comme illustré à la figure 6, ou de goulotte de drainage, comme illustré à la figure 4, sans sortir du cadre de l'invention. A chaque fois le ou les drains sont disposés au niveau du corps 18 tubulaire de la cuve 2. Dans l'exemple représenté à la figure 4, ces moyens 16 de drainage comprennent une pluralité de drains 161 se présentant sous forme de goulottes ou portions de conduit analogues allongées ajourées, lesdits drains 161 étant montés chacun dans la cuve 2 le long d'une génératrice du corps 18 tubulaire de la cuve 2.

Ces drains 161 s'étendent donc à l'intérieur de la cuve 2 le long du corps cylindrique de la cuve 2, parallèlement à l'axe XX' longitudinal de la cuve 2. Indépendamment de leur mode de réalisation, ces drains 161 sont en communication fluidique avec des moyens de sortie des jus partiellement représentés. Ces moyens de sortie des jus peuvent comprendre un collecteur du résultat du drainage, ce collecteur comprenant un orifice de sortie positionnable au-dessus et à l'aplomb d'un réservoir 20 de collecte pour un transfert des jus quittant la cuve par lesdits drains 161 vers ledit réservoir 20 de collecte. En variante ou en complément, des ajourages ménagés sur le corps 18 cylindrique de la cuve 2 ou un drain recouvrant la périphérie de la cuve auraient pu être envisagés.

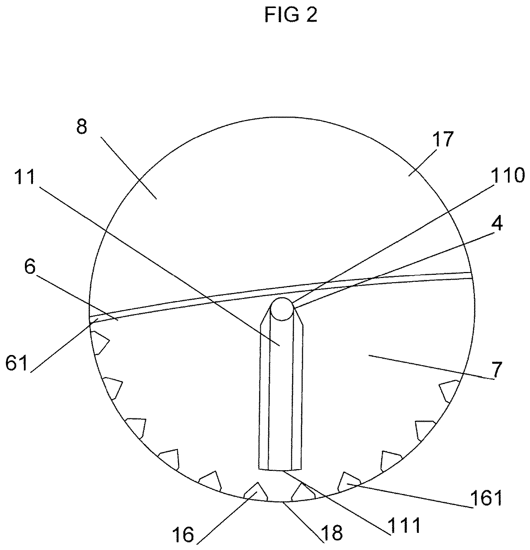

Dans l'exemple illustré aux figures, les drains 161 qui constituent des canaux de drainage longitudinaux sont formés au moyen d'éléments profilés ajourés disposés sur la face interne du corps 18 cylindrique de la cuve en s'étendant suivant une génératrice du corps 18 cylindrique de ladite cuve. Ces éléments profilés forment un tamis de filtrage du fait de la présence d'orifices, tels que des trous ou fentes, ménagés dans leur paroi. Le réservoir 20 de collecte peut quant à lui être disposé au moins partiellement sous la cuve 2. A l'état positionné à l'horizontale de l'axe XX' longitudinal de la cuve 2 correspondant à la configuration d'utilisation, les moyens 16 de drainage sont positionnables en partie inférieure de la cuve pour former le point bas de la cuve. Cette disposition est par exemple représentée à la figure 2 où les drains sont disposés dans la moitié inférieure de la cuve 2 du fait de la position angulaire occupée par la cuve 2.

L'orifice de pressurisation 5 faisant également office d'orifice de dépressurisation de la cuve 2 est raccordable à un circuit 13 de fluide sous pression sur lequel sont disposés un dispositif 9 pour permettre une alimentation en fluide, en particulier en gaz sous pression, de la chambre 8 de commande et un dispositif 15 de génération de vide. Le dispositif 9 permet l'admission, dans la chambre 8 de commande, de gaz comprimé qui peut être de l'air comprimé, pendant les phases de pressurage. Le dispositif 9, pour permettre l'alimentation en fluide sous pression, comprend, une source 91 de fluide sous pression. La source 91 de fluide sous pression peut être un compresseur, un réseau d'air comprimé ou autre. Cette source 91 de fluide sous pression peut donc être intégrée au pressoir 1 ou indépendante du pressoir 1. Le circuit 13 de fluide sous pression qui relie cette source 91 de fluide sous pression à la chambre de commande peut être obturable.

Le pressoir 1 comprend encore, comme mentionné ci-dessus, un dispositif 15 de génération de vide. Le dispositif 15 de génération de vide peut comprendre un générateur de vide, tel qu'une pompe à vide et un organe, tel qu'une électrovanne, d'obturation du circuit 13 de fluide sous pression raccordant l'orifice axial de dépressurisation de la cuve 2 au générateur de vide. Le passage de l'organe d'obturation d'une position à une autre peut être commandé à l'aide d'une unité 10 de commande qui permet également la commande du dispositif 19 d'entraînement en rotation de la cuve 2. Pour permettre un raccordement de la cuve soit à la source 91 de fluide sous pression, soit au générateur de vide, le circuit 13 de fluide sous pression se divise en deux branches menant l'une à la source de fluide sous pression, l'autre, au générateur de vide, comme illustré à la figure 1.

Le dispositif 15 de génération de vide permet l'aspiration de gaz, tel que de l'air comprimé, dans la ou les chambres 8 de commande, en particulier pendant les phases de remplissage, d'émiettage et de vidage de la cuve 2. On comprend, dans l'exemple représenté qui ne comprend qu'une seule chambre 8 de commande, que, lorsque la chambre 8 de commande est mise en dépression, la membrane 6 tend à être plaquée contre les parois de la cuve servant à la délimitation de ladite chambre 8 de commande, ce qui permet, au cours du remplissage de la chambre 7 de traitement, d'optimiser le volume disponible de la chambre 7 de traitement. A l'état pressurisé de la chambre 8 de commande, la membrane 6 tend à être plaquée en direction des drains 161 de manière à presser la matière pour en extraire du jus qui s'écoule alors hors de la cuve par les drains 161. La possibilité de mettre en pression et en dépression la chambre 8 de commande permet également d'appliquer à la membrane des mouvements d'aller-retour de la membrane contre la matière à traiter afin de la presser de manière efficace pour en extraire les jus. Le fonctionnement serait similaire en présence de plusieurs membranes et de plusieurs chambres de commande.

Le pressoir comprend, comme mentionné ci-dessus, une unité 10 de commande qui permet, en sus du pilotage du dispositif 19 d'entraînement en rotation de la cuve 2, un pilotage du dispositif 9 pour permettre une alimentation en gaz sous pression de la ou les chambres 8 de commande et un pilotage du dispositif 15 de génération de vide.

L'unité 10 de commande se présente sous la forme d'un système électronique et informatique qui comprend par exemple un microprocesseur et une mémoire de travail. Selon un aspect particulier de l'invention, l'unité 10 de commande peut se présenter sous la forme d'un automate programmable. Autrement dit, les fonctions et étapes décrites peuvent être mises en œuvre sous forme de programme informatique ou via des composants matériels par exemple des réseaux de portes programmables. En particulier, les fonctions et étapes opérées par l'unité de commande ou ces modules peuvent être réalisées par des jeux d'instruction ou module informatique implémenté dans un processeur ou contrôleur, ou être réalisés par des composants électroniques dédiés ou des composants de type FPGA ou ASIC. Il est aussi possible de combiner des parties informatiques et des parties électroniques. Lorsqu'il est précisé que l'unité 10 de commande ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Le pressoir 1 comprend généralement en outre un dispositif 22 de détermination d'un paramètre représentatif du niveau de remplissage de la cuve 2 et l'unité 10 de commande du dispositif 19 d'entraînement en rotation de la cuve est configurée pour acquérir des données du dispositif 22 de détermination d'un paramètre représentatif du niveau de remplissage de la cuve et pour commander le dispositif 19 d'entraînement en rotation de la cuve 2 en fonction desdites données.

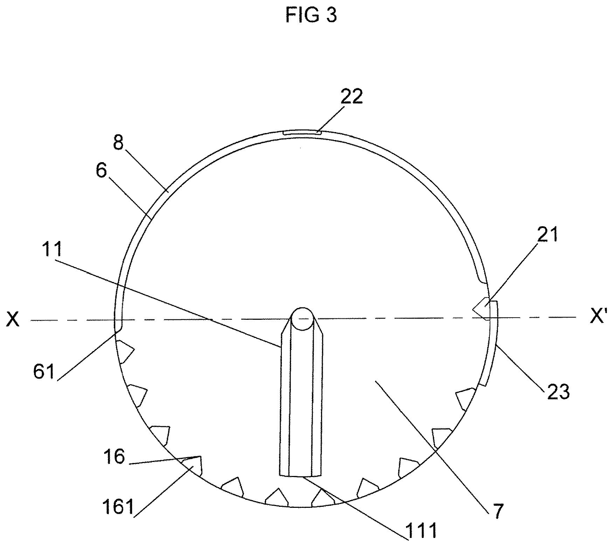

Dans les exemples représentés, le pressoir comprend un dispositif 21 de mise à l'échappement de la cuve 2. Ce dispositif 21 de mise à l'échappement peut affecter un grand nombre de formes. Il peut ainsi se présenter sous forme d'un séparateur liquide/solide affectant la forme d'un drain comme illustré à la figure 3, ou la forme d'une vanne comme illustré à la figure 4. Indépendamment de sa forme de réalisation, ce dispositif 21 de mise à l'échappement est disposé à l'intérieur d'un secteur angulaire S délimité par un premier plan passant par la zone de raccordement de la membrane 6 au corps cylindrique de la cuve et par un second plan radial audit corps 18 cylindrique de la cuve 2 et passant par la ou l'une des portes 23 d'accès. Ce dispositif 21 de mise à l'échappement permet d'éviter une surpression ou dépression à l'intérieur de la cuve pendant la phase de remplissage de la cuve par l'orifice axial de remplissage 4.

Le dispositif 22 de détermination d'un paramètre représentatif du niveau de remplissage de la cuve 2 est, dans les exemples représentés, un capteur 24 de présence de liquide disposé dans le secteur angulaire S. En variante, ce capteur 24 de présence de liquide peut être disposé au niveau du plan de fixation de la membrane à la cuve en dehors du secteur angulaire 5. En variante, le dispositif 22 de détermination d'un paramètre représentatif du niveau de remplissage de la cuve 2 peut être un capteur de niveau de type radar disposé dans la chambre de commande pour détecter le niveau à l'intérieur de la chambre de traitement. Ce capteur de niveau permet de commander l'entraînement en rotation de la cuve et la mise à l'échappement de la cuve si nécessaire. Il a le même rôle que le capteur de présence de liquide décrit ci-dessus. Cette disposition permet de limiter le nombre de rotations de la cuve 2 au strict nécessaire.

De manière caractéristique à l'invention, la chambre 7 de traitement comprend au moins un conduit 11 interne raccordé en entrée, représentée en 110 aux figures, à l'orifice axial de remplissage 4 de la cuve et se développant le long du flasque 17 muni de l'orifice axial de remplissage 4 depuis ledit orifice axial 4 de remplissage vers les moyens de drainage 16. Dans l'exemple représenté, un seul conduit 11 interne est représenté. Ce conduit 11 interne guide la matière à presser depuis l'orifice axial de remplissage vers les moyens de drainage 16. Ce conduit 11 interne permet de faire déboucher la matière à presser dans la cuve 2 en un ou plusieurs emplacements de sortie 111 prédéterminés par rapport aux moyens de drainage 16. Dans les exemples de sortie, un seul emplacement de sortie 111 est représenté. Ce conduit 11 interne permet donc un guidage et un transfert de la matière à presser depuis l'orifice axial de remplissage 4 vers les moyens de drainage 16, c'est-à-dire au moins en direction de la partie du corps cylindrique 18 de la cuve 2 munie des drains 161. Le conduit 11 interne, qui se développe le long de la face dite interne, c'est-à-dire tournée vers l'intérieur de la cuve, du flasque 17 muni de l'orifice axial de remplissage 4 depuis le centre du flasque vers la périphérie du flasque débouche donc en sortie à l'intérieur de la chambre 7 de traitement en un emplacement de sortie 111 écarté de l'axe XX' longitudinal de rotation de la cuve 2. Ce conduit 11 interne peut, après son parcours le long du flasque 17, se développer le long du corps 18 cylindrique de la cuve 2 pour atteindre par exemple la moitié du corps 18 de la cuve 2. En variante, ce conduit 11 interne peut s'étendre majoritairement le long du flasque 17. Cette version correspond à ce qui est représenté. Ce conduit 11 interne est un conduit à paroi pleine entre son entrée 110 et son emplacement de sortie 111. Dans l'exemple représenté, ce conduit 11 interne est en métal, en particulier en tôle soudée au corps 18 cylindrique. Ainsi, la fonction de guidage de la matière à presser est parfaitement assurée. La distance D1 entre l'emplacement de sortie 111 du conduit 11 interne de la chambre 7 de traitement et le corps 18 cylindrique de la cuve 2 est inférieure à la distance D2 entre la sortie 111 du conduit interne 11 de la chambre 7 de traitement et l'axe XX' longitudinal de rotation de la cuve 2. La matière à presser débouche à l'intérieur de la cuve au plus près, voire dans les moyens de drainage 16. Ce conduit 11 interne permet donc aux jus libres contenus dans la matière à presser d'être rapidement pris en charge par les moyens de drainage 16. Ce conduit 11 interne peut être réalisé amovible.

Dans les exemples représentés, le conduit 11 interne débouche en un emplacement de sortie 111 à l'intérieur de la chambre 7 de traitement au niveau d'au moins une partie des moyens de drainage 16 de la cuve 2. En particulier, ce conduit 11 interne débouche en sortie dans la ou l'une des zones Z1 du corps 18 cylindrique de la cuve 2 équipé de moyens de drainage 16. Ainsi, dans l'exemple de la figure 2, le conduit 11 interne débouche en sortie entre deux des drains 161 des moyens de drainage 16. Il en est de même à la figure 4 qui illustre un positionnement différent de la cuve. Il doit être noté que la cuve peut comprendre un seul conduit interne 11 du type précité comme représenté ou plusieurs conduits internes 11 du type précité, lesdits conduits 11 internes débouchant chacun en sortie en un emplacement différent par rapport aux moyens de drainage. De même, le ou chaque conduit interne 11 peut comprendre un ou plusieurs emplacements de sortie 111. Dans le cas d'une pluralité d'emplacements de sortie 111, le conduit 11 interne se divise en plusieurs branches.

Dans les exemples représentés, le conduit 11 interne se développe le long du flasque 17 muni de l'orifice axial 4 de remplissage suivant une direction radiale. Dans l'exemple de la figure 2, l'emplacement de sortie 111 du conduit interne 11 s'étend au milieu des moyens de drainage 16, c'est-à-dire à la moitié du secteur circulaire du corps cylindrique de la cuve dont l'arc de cercle du secteur circulaire est formé par la partie du corps cylindrique 18 de la cuve munie des drains 161 des moyens de drainage. L'arrivée de la matière à presser dans la cuve au niveau des moyens 16 de drainage permet au flux de vendange arrivant, riche en jus libre, d'assurer un décolmatage des drains. La vendange égouttée est déplacée par la vendange non égouttée arrivant par le conduit interne 11. La vendange égouttée fait alors subir une pression par son poids à la vendange non égouttée et favorise ainsi, de manière supplémentaire, la libération des jus libres. La phase d'égouttage peut ainsi être assurée pendant le remplissage qui peut lui-même être réalisé en continu. Le lancement du cycle de pressurage peut donc s'effectuer plus rapidement. L'amélioration de l'égouttage permet de remplir la cuve avec une plus grande quantité de matière à presser et donc d'augmenter les capacités de traitement de la cuve.

En pratique, le fonctionnement d'un pressoir tel que décrit ci-dessus est tel que suit. Avant de remplir la chambre 7 de traitement en matière, telle que de la vendange, on aspire, à l'aide du dispositif 15 de génération de vide, par l'orifice de pressurisation 5 équipant la chambre 8 de commande, l'air ou tout autre agent de pression équivalent hors de la chambre 8 de commande de la cuve 2, de sorte que le vide s'y produit et que la membrane 6 se plaque contre les parties de paroi de la cuve servant à la délimitation de ladite chambre 8 de commande.

Le dispositif 15 de génération de vide est piloté par l'unité 10 de commande à l'aide d'un capteur de mesure d'un paramètre représentatif de la pression disposé soit à l'intérieur de l'enceinte de la cuve dans la ou l'une des chambres 8 de commande, soit au niveau du circuit 13 de fluide sous pression raccordant le dispositif 15 de génération du vide à la cuve 2.

Le remplissage de la cuve du pressoir avec la matière à presser peut s'opérer à l'arrêt de la cuve par la ou les portes dont est équipée la chambre de traitement. Toutefois, le remplissage de la cuve s'opère principalement par l'orifice de remplissage axial 4 avantageusement équipé d'un raccord tournant pour permettre un remplissage pendant la rotation de la cuve 2.

Ce remplissage s'opère donc à l'état fermé des portes de la cuve et de manière telle qu'une surpression peut être constatée dans la chambre 7 de traitement lorsqu'un colmatage s'opère au niveau des moyens 16 de drainage ou lorsque le débit d'évacuation devient inférieur au débit d'alimentation.

Dans cette position de remplissage, la cuve 2 occupe une position dans laquelle les drains 161 sont disposés dans la partie inférieure de la cuve 2, en regard du réservoir 20 de collecte du liquide contenu dans la matière disposée au moins partiellement sous la cuve. Dans cette position de la cuve 2, l'emplacement de sortie 111 du conduit 11 interne forme un point bas de la cuve 2 comme illustré à la figure 3 et la matière à presser qui entre dans la cuve par l'orifice axial de remplissage 4 se déplace à l'intérieur du conduit 11 interne pour déboucher dans la cuve 2 au plus près des moyens de drainage 16. Si nécessaire, au cours de ce remplissage de la cuve, une rotation de la cuve peut être commandée par l'unité 10 de commande notamment en fonction du niveau de remplissage de la cuve.

Au cours de cette phase de remplissage et d'égouttage, l'écoulement des jus s'opère de manière libre à pression atmosphérique. Une fois cet écoulement libre des jus achevé, la phase de pressurage peut commencer. On suppose qu'une ou plusieurs pressions de consigne ont été mémorisées ainsi que des périodes de temps correspondant au maintien de ladite pression de consigne à l'intérieur de la ou les chambres de commande. On actionne alors le dispositif 9 d'alimentation en fluide sous pression.

Sous l'effet de cette alimentation en fluide sous pression de la chambre 8 de commande, la membrane 6 est pressée contre la matière présente dans la chambre 7 de traitement qui est elle-même mise sous pression contre les drains 161. Il en résulte que la partie liquide de cette matière s'écoule au travers des drains 161 tandis que la partie solide reste dans la cuve en dehors desdits drains 161.

On procède ensuite à la mise sous vide de la chambre 8 de commande au cours de laquelle on écarte la membrane 6 des drains 161 puis à une phase d'émiettage au cours de laquelle on fait tourner la cuve 2 autour de son axe pour disloquer le gâteau de matière qui se forme sous l'effet de la pression. Une nouvelle phase de pressurage peut alors être engagée.

Une fois la phase de pressurage achevée, la chambre de commande est à nouveau mise sous vide pour permettre à un opérateur d'enlever la matière solide restant dans la cuve. Pour vider la cuve, une fois le pressurage effectué, on ouvre la ou les portes équipant la paroi latérale périphérique de la cuve et on fait tourner la cuve de sorte que la partie solide restant dans la chambre de traitement s'évacue progressivement au travers de l'ouverture démasquée par la porte. L'opérateur peut alors nettoyer la membrane en faisant passer un jet d'eau à travers l'ouverture latérale ménagée dans le corps de cylindre côté chambre de traitement pour nettoyer la membrane plaquée contre la paroi de la chambre de commande. Un nouveau cycle peut alors débuter.

Il est à noter que le fonctionnement, tel que décrit ci-dessus, serait similaire en présence de plusieurs membranes et de plusieurs chambres de commande. Ce fonctionnement serait également similaire en présence de plusieurs conduits internes ou en présence de plusieurs emplacements de sortie par conduit interne.

## Revendications

1. Pressoir (1), de préférence pneumatique, pour séparer les parties solide et liquide, encore appelée jus, d'une matière telle que de la vendange, ledit pressoir (1) comprenant une cuve (2) présentant un axe (XX') longitudinal, un châssis (3) support sur lequel la cuve (2) est disposée sensiblement à l'horizontale et est montée à rotation autour de son axe longitudinal et des moyens (16) de drainage des jus (2), ladite cuve (2) présentant un corps (18) tubulaire fermé à chacune de ses extrémités opposées par un flasque (17), l'un des flasques (17) de la cuve (2) étant équipé d'un orifice axial (4) de remplissage pour le remplissage de la cuve (2) en matière à presser, ladite cuve (2) étant équipée en outre d'au moins un orifice (5) de pressurisation, ladite cuve (2) comprenant au moins une membrane (6), la ou les membranes (6) séparant de manière étanche le volume intérieur de la cuve (2) en une chambre (7) dite de traitement, dans laquelle débouche ledit orifice axial de remplissage (4), et au moins une chambre (8) dite de commande, dans laquelle débouche le ou l'une des orifices de pressurisation (5), ladite chambre (7) de traitement étant munie des moyens de drainage (16) disposés au moins dans une zone (Z1) du corps (18) tubulaire de la cuve (2), la chambre (7) de traitement comprenant au moins un conduit (11) interne raccordé en entrée (110) à l'orifice axial de remplissage (4) de la cuve, le ou au moins l'un des conduits (11) interne de la chambre (7) de traitement se développant le long du flasque (17) muni de l'orifice axial de remplissage (4) depuis ledit orifice axial de remplissage (4) vers les moyens de drainage (16) pour permettre un transfert de la matière à presser depuis l'orifice axial de remplissage (4) vers les moyens de drainage (16), ce conduit (11) interne débouchant en sortie à l'intérieur de la chambre (7) de traitement en un ou plusieurs emplacements de sortie (111) écartés de l'axe (XX') longitudinal de la cuve (2), les moyens de drainage (16) comprenant un ou plusieurs drains (161) **caractérisé en ce que** le pressoir (1) qui comprend, pour le montage à rotation de la cuve (2) autour de son axe (XX') longitudinal, un dispositif (19) d'entraînement en rotation de la cuve (2) et une unité (10) de commande du dispositif (19) d'entraînement en rotation, comprend en outre un dispositif (22) de détermination d'un paramètre représentatif du niveau de remplissage de la cuve (2) et **en ce que** l'unité (10) de commande du dispositif (19) d'entraînement en rotation de la cuve est configurée pour acquérir des données du dispositif (22) de détermination d'un paramètre représentatif du niveau de remplissage de la cuve et pour commander le dispositif (19) d'entraînement en rotation de la cuve (2) en fonction desdites données.

2. Pressoir (1) selon la revendication 1, **caractérisé en ce que**, pour le ou au moins l'un des conduits (11) internes de la chambre (7) de traitement, la distance (D1) entre le ou au moins l'un des emplacements de sortie (111) du conduit (11) interne de la chambre (7) de traitement et le corps (18) cylindrique de la cuve (2) est inférieure à la distance (D2) entre ledit emplacement de sortie (111) du conduit (11) interne de la chambre (7) de traitement et l'axe (XX') longitudinal de rotation de la cuve (2).

3. Pressoir (1) selon l'une des revendications 1 ou 2, **caractérisé en ce que** le ou au moins l'un des conduits (11) internes se développe le long du flasque (17) muni de l'orifice axial (4) de remplissage au moins partiellement suivant une direction radiale.

4. Pressoir (1) selon l'une des revendications 1 à 3, **caractérisé en ce que** le ou au moins l'un des emplacements de sortie (111) du ou au d'au moins l'un des conduits (11) interne est disposé à l'intérieur de la chambre (7) de traitement au niveau d'au moins une partie des moyens de drainage (16) de la cuve (2).

5. Pressoir (1) selon l'une des revendications 1 à 4, **caractérisé en ce que** le ou au moins l'un des emplacements de sortie (111) du ou au d'au moins l'un des conduits (11) internes est disposé dans la ou l'une des zones (Z1) du corps (18) tubulaire de la cuve (2) équipée de moyens de drainage (16).

6. Pressoir (1) selon l'une des revendications 1 à 5, **caractérisé en ce que** les moyens de drainage (16) comprenant un ou plusieurs drains (161), **en ce que** chaque drain (161) se présente sous forme d'une goulotte ou portion de conduit analogue, allongée, ajourée, et **en ce que** le ou chaque drain (161) est monté dans la cuve (2).

7. Pressoir (1) selon la revendication 6, **caractérisé en ce que** les moyens de drainage (16) comprenant plusieurs drains (161), le ou au moins l'un des emplacements de sortie (111) du ou au d'au moins l'un des conduits (11) interne est disposé entre les ou deux des drains (161) des moyens de drainage (16).

8. Pressoir (1) selon l'une des revendications 1 à 7, **caractérisé en ce que** le ou au moins l'un des conduits (11) internes est un conduit à paroi pleine entre son entrée (110) et le ou chacun de ses emplacements de sortie (111).

9. Pressoir (1) selon l'une des revendications 1 à 8, **caractérisé en ce que** le ou au moins l'un des orifices de pressurisation (5) est un orifice axial, **en ce que** la ou au moins l'une des membranes (6) présente une zone (61) de raccordement à la cuve (2) qui s'étend au moins partiellement , au niveau d'un flasque (17) d'un côté d'un plan médian de la cuve (2) passant par les orifices axiaux de remplissage (4) et de pressurisation (5), **en ce que** le pressoir (1) comprend au moins une porte (23) d'accès à la cuve et un dispositif (21) de mise à l'échappement de la cuve, ce dispositif (21) de mise à l'échappement étant disposé à l'intérieur d'un secteur angulaire (S) délimité par un premier plan passant par la zone (61) de raccordement de la membrane (16) au corps cylindrique de la cuve et par un second plan radial audit corps (18) cylindrique de la cuve (2) et passant par la porte (23).

10. Pressoir (1) selon la revendication 9, **caractérisé en ce que** le dispositif (22) de détermination d'un paramètre représentatif du niveau de remplissage de la cuve (2) est un capteur (24) de présence de liquide disposé dans la chambre (7) de traitement.

11. Pressoir (1) selon l'une des revendications 1 à 10, **caractérisé en ce que** la cuve (2) comprenant une seule membrane (6), ladite membrane (6) est fixée de manière étanche d'une part, au corps cylindrique (18) de la cuve (2) suivant deux bords longitudinaux opposés, d'autre part, aux flasques (17) suivant deux bords transversaux respectifs et **en ce que** les bords transversaux de raccordement de la membrane (6) aux flasques s'étendent, au niveau de l'un des flasques (17), d'un côté d'un plan longitudinal médian ou diamétral de la cuve (2) passant par l'orifice axial de remplissage (4) de la cuve (2) et l'orifice axial de pressurisation (5), et au niveau du flasque (17) opposé, de l'autre côté dudit plan longitudinal médian.

## Patentansprüche

1. Presse (1), vorzugsweise pneumatisch, zum Trennen des festen und flüssigen Teils, auch Saft genannt, eines Materials wie Trauben, wobei die Presse (1) einen Behälter (2) mit einer Längsachse (XX'), einen Tragrahmen (3), auf dem der Behälter (2) im Wesentlichen horizontal angeordnet und um seine Längsachse drehbar montiert ist, und Mittel (16) zur Drainage der Säfte (2) aufweist, wobei der Behälter (2) einen rohrförmigen Körper (18) aufweist, der an jedem seiner gegenüberliegenden Enden durch einen Flansch (17) geschlossen ist, wobei der eine der Flansche (17) des Behälters (2) mit einer axialen Einfüllöffnung (4) zum Befüllen des Behälters (2) mit dem zu pressenden Material ausgestattet ist, wobei der Behälter (2) darüber hinaus mit mindestens einer Druckbeaufschlagungsöffnung (5) ausgestattet ist, wobei der Behälter (2) mindestens eine Membran (6) aufweist, wobei die Membran oder Membranen (6) das Innenvolumen des Behälters (2) dicht in eine sogenannte Verarbeitungskammer (7), in die die axiale Einfüllöffnung (4) mündet, und mindestens eine sogenannte Steuerkammer (8) unterteilt oder unterteilen, in die die oder eine der Druckbeaufschlagungsöffnungen (5) mündet, wobei die Verarbeitungskammer (7) mit Drainagemitteln (16) versehen ist, die zumindest in einer Zone (Z1) des rohrförmigen Körpers (18) des Behälters (2) angeordnet sind, wobei die Verarbeitungskammer (7) mindestens einen Innenkanal (11) aufweist, der am Eingang (110) mit der axialen Einfüllöffnung (4) des Behälters verbunden ist, wobei sich der oder mindestens der eine der Innenkanäle (11) der Verarbeitungskammer (7) entlang des mit der axialen Einfüllöffnung (4) versehenen Flansches (17) von der axialen Einfüllöffnung (4) in Richtung der Drainagemittel (16) entfaltet, um einen Transfer des zu pressenden Materials von der axialen Einfüllöffnung (4) in Richtung der Drainagemittel (16) zu ermöglichen, wobei dieser Innenkanal (11) am Ausgang im Inneren der Verarbeitungskammer (7) in einer oder mehreren von der Längsachse (XX') des Behälters (2) beabstandeten Austrittsstellen (111) mündet, wobei die Drainagemittel (16) eine oder mehrere Drainagen (161) aufweisen, **dadurch gekennzeichnet, dass** die Presse (1), die zur drehbaren Montage des Behälters (2) um seine Längsachse (XX') eine Antriebsvorrichtung (19) zum Drehen des Behälters (2) und eine Steuereinheit (10) der Antriebsvorrichtung (19) zum Drehen aufweist, darüber hinaus eine Vorrichtung (22) zur Bestimmung eines für den Füllstand des Behälters (2) repräsentativen Parameters aufweist und dass die Steuereinheit (10) der Antriebsvorrichtung (19) zum Drehen des Behälters ausgelegt ist, Daten der Vorrichtung (22) zur Bestimmung eines für den Füllstand des Behälters repräsentativen Parameters zu erfassen und die Antriebsvorrichtung (19) zum Drehen des Behälters (2) in Abhängigkeit der Daten zu steuern.

2. Presse (1) nach Anspruch 1, **dadurch gekennzeichnet, dass** für den oder mindestens den einen der Innenkanäle (11) der Verarbeitungskammer (7) der Abstand (D1) zwischen der oder mindestens der einen der Austrittsstellen (111) des Innenkanals (11) der Verarbeitungskammer (7) und dem zylindrischen Körper (18) des Behälters (2) kleiner ist als der Abstand (D2) zwischen der Austrittsstelle (111) des Kanals (11) der Verarbeitungskammer (7) und der Längsdrehachse (XX') des Behälters (2).

3. Presse (1) nach einem der Ansprüche 1 oder 2, **dadurch gekennzeichnet, dass** sich der oder mindestens der eine der Innenkanäle (11) entlang des mit der axialen Einfüllöffnung (4) versehenen Flansches (17) zumindest teilweise in einer radialen Richtung entfaltet.

4. Presse (1) nach einem der Ansprüche 1 bis 3, **dadurch gekennzeichnet, dass** die oder mindestens die eine der Austrittsstellen (111) des oder mindestens des einen der Innenkanäle (11) im Inneren der Verarbeitungskammer (7) an zumindest einem Teil der Drainagemittel (16) des Behälters (2) angeordnet ist.

5. Presse (1) nach einem der Ansprüche 1 bis 4, **dadurch gekennzeichnet, dass** die oder mindestens die eine der Austrittsstellen (111) des oder mindestens des einen der Innenkanäle (11) in der oder der einen der Zonen (Z1) des rohrförmigen Körpers (18) des mit Drainagemitteln (16) ausgestatteten Behälters (2) angeordnet ist.

6. Presse (1) nach einem der Ansprüche 1 bis 5, **dadurch gekennzeichnet, dass** die Drainagemittel (16) eine oder mehrere Drainagen (161) aufweisen, dass jede Drainage (161) sich in Form einer Rinne oder eines analogen, länglichen, durchbrochenen Kanalabschnitts darstellt und dass die oder jede Drainage (161) in dem Behälter (2) montiert ist.

7. Presse (1) nach Anspruch 6, **dadurch gekennzeichnet, dass**, während die Drainagemittel (16) mehrere Drainagen (161) aufweisen, die oder mindestens die eine der Austrittsstellen (111) des oder mindestens des einen der Innenkanäle (11) zwischen den oder zwei der Drainagen (161) der Drainagemittel (16) angeordnet ist.

8. Presse (1) nach einem der Ansprüche 1 bis 7, **dadurch gekennzeichnet, dass** der oder mindestens der eine der Innenkanäle (11) zwischen seinem Eingang (110) und der oder jeder seiner Austrittsstellen (111) ein Kanal mit voller Wandung ist.

9. Presse (1) nach einem der Ansprüche 1 bis 8, **dadurch gekennzeichnet, dass** die oder mindestens die eine der Druckbeaufschlagungsöffnungen (5) eine axiale Öffnung ist, dass die oder mindestens die eine der Membranen (6) eine Zone (61) zur Verbindung mit dem Behälter (2) aufweist, die sich zumindest teilweise an einem Flansch (17) auf einer Seite einer durch die axiale Einfüll- (4) und Druckbeaufschlagungsöffnung (5) verlaufenden Mittelebene des Behälters (2) erstreckt, dass die Presse (1) mindestens eine Zugangstür (23) zu dem Behälter und eine Vorrichtung (21) zur Entlüftung des Behälters aufweist, wobei diese Entlüftungsvorrichtung (21) im Inneren eines Winkelsektors (S) angeordnet ist, der durch eine erste durch die Zone (61) zur Verbindung der Membran (16) mit dem zylindrischen Körper des Behälters verlaufenden Ebene und durch eine zweite zu dem zylindrischen Körper (18) des Behälters (2) radiale und durch die Tür (23) verlaufende Ebene begrenzt wird.

10. Presse (1) nach Anspruch 9, **dadurch gekennzeichnet, dass** die Vorrichtung (22) zur Bestimmung eines für den Füllstand des Behälters (2) repräsentativen Parameters ein in der Verarbeitungskammer (7) angeordneter Sensor (24) für Anwesenheit von Flüssigkeit ist.

11. Presse (1) nach einem der Ansprüche 1 bis 10, **dadurch gekennzeichnet, dass** der Behälter (2) eine einzige Membran (6) aufweist, wobei die Membran (6) einerseits am zylindrischen Körper (18) des Behälters (2) entlang zweier gegenüberliegender Längskanten und andererseits an den Flanschen (17) entlang zweier entsprechender Querkanten dicht befestigt ist, und dass sich die Querkanten zur Verbindung der Membran (6) mit den Flanschen an einem der Flansche (17) auf einer Seite einer durch die axiale Einfüllöffnung (4) des Behälters (2) und die axiale Druckbeaufschlagungsöffnung (5) verlaufenden Längsmittel- oder Diametralebene des Behälters (2) und an dem gegenüberliegenden Flansch (17) auf der anderen Seite der Längsmittelebene erstrecken.

## Claims

1. Press (1), preferably a pneumatic press, for separating the solid part and liquid part, also referred to as juice, of a material such as grape harvest, said press (1) comprising a tank (2) having a longitudinal axis (XX'), a support frame (3) on which the tank (2) is arranged substantially horizontally and is mounted to rotate about its longitudinal axis and means (16) for draining the juices (2), said tank (2) having a tubular body (18) that is closed at each of its opposite ends by a plate (17), one of the plates (17) of the tank (2) being equipped with an axial filling orifice (4) for filling the tank (2) with material to be pressed, said tank (2) being further equipped with at least one pressurization orifice (5), said tank (2) comprising at least one membrane (6), the one or more membranes (6) sealingly separating the internal volume of the tank (2) into a chamber (7) referred to as treatment chamber, into which said axial filling orifice (4) opens, and at least one chamber (8) referred to as control chamber, into which the or one of the pressurization orifices (5) opens, said treatment chamber (7) being provided with the drainage means (16) arranged at least in one zone (Z1) of the tubular body (18) of the tank (2), the treatment chamber (7) comprising at least one internal duct (11) connected at the inlet (110) to the axial filling orifice (4) of the tank, the or at least one of the internal ducts (11) of the treatment chamber (7) extending along the plate (17) provided with the axial filling orifice (4) from said axial filling orifice (4) towards the drainage means (16) to allow a transfer of the material to be pressed from the axial filling orifice (4) towards the drainage means (16), this internal duct (11) opening at the outlet inside the treatment chamber (7) at one or more outlet locations (111) that are spaced apart from the longitudinal axis (XX') of the tank (2), the drainage means (16) comprising one or more drains (161) **characterized in that** the press (1) that comprises, for the mounting of the tank (2) to rotate about its longitudinal axis (XX'), a device (19) for driving the tank (2) in rotation and a unit (10) for controlling the rotational drive device (19), further comprises a device (22) for determining a parameter representative of the level of filling of the tank (2) and **in that** the unit (10) for controlling the device (19) for driving the tank in rotation is configured to acquire data from the device (22) for determining a parameter representative of the level of filling of the tank and to control the device (19) for driving the tank (2) in rotation as a function of said data.

2. Press (1) according to Claim 1, **characterized in that**, for the or at least one of the internal ducts (11) of the treatment chamber (7), the distance (D1) between the or at least one of the outlet locations (111) of the internal duct (11) of the treatment chamber (7) and the cylindrical body (18) of the tank (2) is smaller than the distance (D2) between said outlet location (111) of the internal duct (11) of the treatment chamber (7) and the longitudinal axis (XX') of rotation of the tank (2).

3. Press (1) according to either of Claims 1 and 2, **characterized in that** the or at least one of the internal ducts (11) extends along the plate (17) provided with the axial filling orifice (4) at least partially in a radial direction.

4. Press (1) according to one of Claims 1 to 3, **characterized in that** the or at least one of the outlet locations (111) of the or at least one of the internal ducts (11) is arranged inside the treatment chamber (7) at at least a part of the drainage means (16) of the tank (2).

5. Press (1) according to one of Claims 1 to 4, **characterized in that** the or at least one of the outlet locations (111) of the or at least one of the internal ducts (11) is arranged in the or one of the zones (Z1) of the tubular body (18) of the tank (2) equipped with drainage means (16).

6. Press (1) according to one of Claims 1 to 5, **characterized in that** the drainage means (16) comprise one or more drains (161), **in that** each drain (161) is in the form of a trough or similar duct portion, which is elongate and perforated, and **in that** the or each drain (161) is mounted in the tank (2).

7. Press (1) according to Claim 6, **characterized in that**, the drainage means (16) comprising a plurality of drains (161), the or at least one of the outlet locations (111) of the or at least one of the internal ducts (11) is arranged between the or two of the drains (161) of the drainage means (16).

8. Press (1) according to one of Claims 1 to 7, **characterized in that** the or at least one of the internal ducts (11) is a duct with a solid wall between its inlet (110) and the or each of its outlet locations (111).

9. Press (1) according to one of Claims 1 to 8, **characterized in that** the or at least one of the pressurization orifices (5) is an axial orifice, **in that** the or at least one of the membranes (6) has a zone (61) for connection to the tank (2) that extends at least partially, at a plate (17) on one side of a median plane of the tank (2) passing through the axial filling (4) and pressurization (5) orifices, **in that** the press (1) comprises at least one door (23) for access to the tank and a device (21) for venting the tank, this venting device (21) being arranged inside an angular sector (S) delimited by a first plane passing through the zone (61) for connection of the membrane (16) to the cylindrical body of the tank and by a second plane radial to said cylindrical body (18) of the tank (2) and passing through the door (23).

10. Press (1) according to Claim 9, **characterized in that** the device (22) for determining a parameter representative of the level of filling of the tank (2) is a liquid presence sensor (24) arranged in the treatment chamber (7).

11. Press (1) according to one of Claims 1 to 10, **characterized in that**, the tank (2) comprising a single membrane (6), said membrane (6) is sealingly fastened, on the one hand, to the cylindrical body (18) of the tank (2) along two opposite longitudinal edges and, on the other hand, to the plates (17) along two respective transverse edges and **in that** the transverse edges for connection of the membrane (6) to the plates extend, at one of the plates (17), on one side of a diametral or median longitudinal plane of the tank (2) passing through the axial filling orifice (4) of the tank (2) and the axial pressurization orifice (5), and at the opposite plate (17), on the other side of said median longitudinal plane.
